(19) Europäisches Patentamt
European Patent Office
Office européen des brevets

(11) Veröffentlichungsnummer: **0 071 139**
**B1**

(12) # EUROPÄISCHE PATENTSCHRIFT

(45) Veröffentlichungstag der Patentschrift: **04.12.85**

(51) Int. Cl.⁴: **C 08 G 18/83**, C 08 G 18/10, C 08 G 18/50, C 07 C 125/06

(21) Anmeldenummer: **82106476.3**

(22) Anmeldetag: **19.07.82**

(54) **Vereinfachtes Verfahren zur Herstellung von Polyaminen durch alkalische Hydrolyse von NCO-Gruppen aufweisenden Verbindungen und Verwendung dieser Polyamine zur Herstellung von Polyurethanen.**

(30) Priorität: **29.07.81 DE 3129979**

(43) Veröffentlichungstag der Anmeldung: **09.02.83 Patentblatt 83/6**

(45) Bekanntmachung des Hinweises auf die Patenterteilung: **04.12.85 Patentblatt 85/49**

(84) Benannte Vertragsstaaten: **BE DE FR GB IT**

(56) Entgegenhaltungen:
**EP - A - 0 050 275**
**DE - A - 2 948 419**
**FR - A - 1 415 317**
**US - A - 2 888 439**

(73) Patentinhaber: **BAYER AG, Konzernverwaltung RP Patentabteilung, D-5090 Leverkusen 1 Bayerwerk (DE)**

(72) Erfinder: **Rasshofer, Werner, Dr., Wolfskaul 10, D-5000 Köln 80 (DE)**
Erfinder: **König, Klaus, Dr., Heimannstrasse 50, D-5090 Leverkusen 1 (DE)**
Erfinder: **Meyborg, Holger, Dr., Bergstrasse 92, D-5068 Odenthal (DE)**
Erfinder: **Meckel, Walter, Dr., Zonser Strasse 9, D-4040 Neuss (DE)**
Erfinder: **Zenner, Armin, Dr., Goethestrasse 65, D-4047 Dormagen 1 (DE)**

**EP 0 071 139 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Erfindung betrifft ein verbessertes Verfahren zur Herstellung von aliphatischen und/oder aromatischen Polyaminen, welche Urethan- und/oder Harnstoff- und/oder Biuret- und/oder Isocyanuratgruppen, sowie vorzugsweise zusätzlich Alkylenether-, Carbonat- und/oder Acetalgruppen enthalten, durch alkalische Hydrolyse von aromatischen und/oder aliphatischen Isocyanatgruppen aufweisenden NCO-Voradduktén unter vereinfachter Aufarbeitung der anfallenden Polyamine.

Beansprucht wird auch die Verwendung der nach dem Verfahren erhaltenen Polyamine zur Herstellung von Polyurethanen.

Es ist bekannt, daß aromatische Isocyanate durch saure Hydrolyse in primäre Amine überführt werden können. Die Reaktion verläuft allerdings nur sehr unvollständig, da das bei der Hydrolyse gebildete Amin mit noch nicht umgesetztem Isocyanat zum entsprechenden Harnstoff weiter reagiert. Diese Folgereaktion läßt sich auch durch Anwendung überschüssiger starker Mineralsäure nicht unterdrücken. Ein neueres Beispiel findet sich in der JP-PS 55007-827.

In der DE-B 1 270 046 wird ein Verfahren zur Herstellung definierter, Polyalkylenglykolether-Segmente enthaltender, primärer aromatischer Amine beschrieben, bei dem man Umsetzungsprodukte von aromatischen Di- oder Triisocyanaten mit Polyalkylenglykolethern und/oder Polyalkylenglykolthioethern, vorzugsweise solchen mit Molekulargewichten zwischen 400 und 4000, mit sekundären oder tertiären Carbinolen umsetzt und anschließend (gegebenenfalls in Gegenwart saurer Katalysatoren) in einem inerten Lösungsmittel einer thermischen Spaltung unterwirft. Nachteilig ist dabei, daß im Verlauf der thermischen Spaltung der Urethane brennbare, leicht flüchtige Alkene entstehen, die im Gemisch mit Luft explosiv sind, so daß entsprechende Vorsichtsmaßnahmen getroffen werden müssen.

Gegenstand der DE-B 1 694 152 ist die Herstellung von mindestens zwei endständige Aminogruppen aufweisenden Präpolymeren durch Umsetzung von Hydrazin, Aminophenylethylamin oder anderen Diaminen mit einem NCO-Präpolymer aus einem Polyetherpolyol und Polyisocyanat (NCO : NH-Verhältnis = 1 : 1,5 bis 1 : 5). Nicht-umgesetztes Amin muß dabei in einem weiteren Schritt sorgfältig entfernt werden, da es die Umsetzung mit Polyisocyanaten stark katalysiert, so zu kurzen Verarbeitungszeiten führt und auch selbst als Reaktionspartner autritt.

Eine andere Synthesemöglichkeit für Urethangruppen aufweisende Polyamine wird in der FR-PS 1 415 317 beschrieben. Urethangruppen-haltige NCO-Präpolymere werden mit Ameisensäure in die N-Formylderivate überführt, die zu endständigen aromatischen Aminen verseift werden. Auch die Reaktion von NCO-Präpolymeren mit Sulfaminsäure gemäß DE-B 1 555 907 führt zu Verbindungen mit endständigen Aminogruppen. Desweiteren werden höhermolekulare, aliphatische, sekundäre und primäre Aminogruppen aufweisende Voraddukte nach DE-B 1 215 373 durch Umsetzung höhermolekularer Hydroxylverbindungen mit Ammoniak in Gegenwart von Katalysatoren unter Druck bei hohen Temperaturen erhalten oder gemäß US-PS 3 044 989 durch Umsetzung höhermolekularer Polyhydroxylverbindungen mit Acrylnitril unter anschließender katalytischer Hydrierung. Auch durch Umsetzung von NCO-Präpolymeren mit Hydroxylgruppen aufweisenden Enaminen, Aldiminen oder Ketiminen und anschließende Hydrolyse erhält man gemäß DE-A 2 546 536 bzw. US-PS 3 865 791 höhermolekulare, endständige Aminogruppen und Urethangruppen aufweisende Verbindungen.

Überraschenderweise wurde gefunden, daß man definierte, Urethan- und/oder Harnstoff- und/ oder Biuret- und/oder Isocyanuratgruppen, sowie gegebenenfalls Alkylenether- und/oder Carbonat- und/oder Acetalgruppen enthaltende primäre aromatische oder aliphatische Polyamine direkt erhält, wenn man NCO-Gruppen aufweisende Verbindungen, vorzugsweise NCO-Voraddukte, mit ausgewählten Basen, (vorzugsweise wäßrigen Basenlösungen in äquivalenter oder überschüssiger $OH^{\ominus}$-Menge, bezogen auf NCO) vermischt und die entsprechenden Carbamatsalze mit einer der eingesetzten Basenmenge äquivalenten Menge einer starken Säure, vorzugsweise einer Mineralsäure, behandelt.

In der eigenen, unveröffentlichten Patentanmeldung P 2 948 419.3 wurde ein Verfahren zur Herstellung von Urethan- und/oder Harnstoffgruppen aufweisenden Polyaminen durch Hydrolyse von endständige Isocyanatgruppen aufweisenden Verbindung angegeben, wobei mittels Alkali das Carbamat hergestellt, das Carbamat durch Zusatz einer überschüssigen Menge an Mineralsäure unter Abspaltung von $CO_2$ in ein Salz überführt, in einer weiteren Stufe überschüssige Mineralsäure durch Basenzusatz neutralisiert und das so freigesetzte Polyamin aus dem Reaktionsprodukt auf an sich bekannte Weise abgetrennt wurde.

Es wird in der erfindungsgemäßen Durchführung eine verbesserte Durchführungsform vorgeschlagen, wobei auch eine Stufe der Aufarbeitung eingespart und die Salzfracht vermindert wird. Durch die verbesserte Durchführung kann eine wesentlich schnellere und vollständigere Abspaltung des Kohlendioxids aus dem Carbamat erreicht werden. Insbesondere eignet sich das Verfahren für eine kontinuierliche Reaktionsführung.

Gegenstand der Erfindung ist somit ein Verfahren zur Herstellung von Urethan- und/oder Harnstoff- und/oder Biuret- und/oder Isocyanuratgruppen, sowie gegebenenfalls Alkylenether- und/oder Carbonat- und/oder Acetalgruppen aufweisenden, primären aliphatischen und/oder aromatischen Polyaminen durch Hydrolyse von aromatische und/oder aliphatische NCO-Gruppen aufweisenden Verbindungen mit Urethan- und/oder Harnstoff- und/oder Biuret- und/oder Isocyanuratgruppen, sowie gegebenenfalls Alkylenether- und/oder Carbonat- und/oder Acetalgruppen, dadurch gekennzeichnet, daß man

a) die NCO-Gruppen aufweisenden Verbindungen durch Vermischen mit Basen aus der I., II. und III. Hauptgruppe des Periodensystems und/oder quartären Ammoniumhydroxiden in Gegenwart von Wasser, vorzugsweise wäßrigen Lösungen von Alkali- und Erdalkalihydroxiden, in die Carbamate überführt und zur Gewinnung des Polyamins
b) das Carbamat zur Vereinigung mit einer der Base äquivalenten Menge einer starken Säure unter $CO_2$- Abspaltung direkt in das freie Amin, gleichzeitig die überschüssige Base in das entsprechende Säuresalz überführt und
c) das freie Amin auf an sich bekannte Weise isoliert.

Die Vereinigung der Carbamatlösung mit der starken Säure kann nach verschiedenen Methoden erfolgen, wobei diese als Methode A) und B) ausführlich vor dem Beispielteil erläutert werden.

Bei der Methode A) gibt man beim Ansäuern die Carbamatreaktionsmischung zu der vorgelegten, etwa äquivalenten Menge der starken Säure.

Bei der Methode B) vermischt man beim Ansäuern die Carbamatreaktionsmischung und die Säure so miteinander, daß pro Zeiteinheit etwa gleiche Äquivalentmengen (val-Mengen) an Säure und Base miteinander zur Reaktion kommen.

Die nach dem erfindungsgemäßen Verfahren zugänglichen Polyamine mit Urethan- und/oder Harnstoff- und/oder Biuret- und/oder Isocyanuratgruppen sowie vorzugsweise auch Alkylenethergruppen, können zur Herstellung von gegebenenfalls zellförmigen Polyurethankunststoffen und Polyurethanschaumstoffen, z. B. durch Umsetzung von

A) Polyisocyanaten mit
B) Polyaminen, sowie gegebenenfalls
C) weiteren niedermolekularen und/oder höhermolekularen Verbindungen mit gegenüber Isocyanaten reaktiven Gruppen, gegebenenfalls
D) in Anwesenheit an sich bekannter Hilfs- und Zusatzstoffe,

verwendet werden, wobei als Komponente B) die nach dem erfindungsgemäßen Verfahren hergestellten Polyamine eingesetzt werden. Bevorzugt werden aromatische Polyamine des Typs B), hergestellt aus NCO-Prepolymeren, eingesetzt.

Die im erfindungsgemäßen Verfahren eingesetzten, aromatische und/oder aliphatische Gruppen aufweisenden Verbindungen sind beispielsweise Biuretpolyisocyanate, Harnstoffpolyisocyanate oder Cyanuratpolyisocyanate. Bevorzugt werden jedoch NCO-Voraddukte (NCO-Prepolymere) eingesetzt, die in an sich bekannter Weise durch Umsetzung von Wasser und/oder hoch- und/oder niedermolekularen, Hydroxy- und/oder Amino- und/oder Thiolgruppen enthaltenden Verbindungen (Molekulargewicht: 60 bis ca. 12 000) mit einem Überschuß an Polyisocyanat hergestellt werden. Es kommen hierfür im Prinzip beliebige, von unter den Reaktionsbedingungen hydrolysierbaren Gruppen (abgesehen von den NCO-Gruppen) freie, aliphatische, cycloaliphatische, araliphatische, aromatische und heterocyclische Polyisocyanate, wie sie z. B. von W. Siefken in Justus Liebigs Annalen der Chemie, 562, Seiten 75 bis 136, beschrieben werden, in Betracht. Beispielsweise sind solche der Formel

$$Q\,(NCO)_n$$

geeignet, in der

n 2 bis 4, vorzugsweise 2,
und
Q einen aliphatischen Kohlenwasserstoffrest mit 2 bis 18, vorzugsweise 6 bis 10, C-Atomen, einen cycloaliphatischen Kohlenwasserstoffrest mit 4 bis 15, vorzugsweise 5 bis 6, C-Atomen, einen aromatischen Kohlenwasserstoffrest mit 6 bis 15, vorzugsweise 6 bis 13, C-Atomen,
oder
einen araliphatischen Kohlenwasserstoffrest mit 8 bis 15, vorzugsweise 8 bis 13, C-Atomen,

bedeuten,

z. B. 1,4-Tetramethylendiisocyanat, 1,6-Hexamethylendiisocyanat, 1,12-Dodecandiisocyanat, ferner cycloaliphatische Diisocyanate in beliebigen Mischungen ihrer Stellungs- und/oder Stereoisomeren, z. B. Cyclobutan-1,3-diisocyanat, Cyclohexan-1,3- und -1,4-diisocyanat, 1-Isocyanato-3,3,5-trimethyl-5-isocyanatomethyl-cyclohexan, 2,4- und 2,6-Hexahydrotoluylendiisocyanat, Hexahydro-1,3- und/oder -1,4-phenylendiisocyanat, Perhydro-2,4'- und/oder -4,4'-diphenylmethandiisocyanat; insbesondere sind jedoch aromatische Diisocyanate geeignet, z. B. 1,3- und 1,4-Phenylendiisocyanat, 2,4- und

2,6-Toluylendiisocyanat, sowie beliebige Gemische dieser Isomeren, Diphenylmethan-2,4'- und/oder -4,4'-diisocyanat, einschließlich seiner Alkyl- und Chlorsubstituierten Derivate und Naphthylen-1,5-diisocyanat.

Beispiele sind
3-Methyl- oder 3,3'-Dimethyl-, oder 3,3'-Dipropyl- oder 3,3'-Diisopropyl- oder
3-Methyl-3'-isopropyl- oder 3,3',5,5'-($C_1-C_4$)-Tetraalkyl- oder 3,3'-Dimethyl-,
5,5'-diisopropyl-diphenylmethan-4,4'-diisocyanate.

Als Polyisocyanate werden zur NCO-Voradduktbildung auch schwefelhaltige Diisocyanate eingesetzt, da sie besonders niedrig schmelzende Endprodukte ergeben. Beispiele sind
2,4'-Diisocyanato-3'-ethyl-diphenylsulfid, 2,4'-Diisocyanato-3'-ethylthio-diphenylsulfid,
2,4'-Diisocyanato-5-ethyl-diphenylsulfid, 2,4'-Diisocyanato-5-isopropylthio-diphenylsulfid,
2-(2'-Isocyanatoethylthio)-phenylisocyanat, 2-(6'-Isocyanatohexylthio)-phenylisocyanat,
2-(2'-Isocyanatohexylthio)-4-phenylisocyanat.

Ferner kommen beispielsweise in Frage: Triphenylmethan-4,4',4''-triisocyanat, Polyphenyl-polymethylen-polyisocyanate, wie sie durch Anilin-Formaldehyd-Kondensation und anschließende Phosgenierung erhalten und z. B. in den GB-PS 874 430 und 848 671 beschrieben werden, m- und p-Isocyanatophenylsulfonyl-isocyanate gemäß der US-PS 3 454 606, perchlorierte Arylpolyisocyanate, wie sie z. B. in der DE-B 1 157 601 (US-PS 3 277 138) beschrieben werden, Norbornan-Diisocyanate gemäß US-PS 3 492 330, Isocyanuratgruppen aufweisende Polyisocyanate, wie sie z. B. in der US-PS 3 001 973, in den DE-PS 1 022 789, 1 222 067 und 1 027 394 sowie in den DE-PS 1 929 034 und 2 004 048 beschrieben werden, Urethangruppen aufweisende Polyisocyanate, wie sie z. B. in der BE-PS 752 261 oder in den US-PS 3 394 164 und 3 644 457 beschrieben werden, acylierte Harnstoffgruppen aufweisende Polyisocyanate gemäß der DE-PS 1 230 778 sowie durch Telomerisationsreaktionen hergestellte Polyisocyanate, wie sie z. B. in der US-PS 3 654 196 beschrieben werden. Allophanatgruppenhaltige Polyisocyanate können auch eingesetzt werden, doch ist dies weniger bevorzugt, da sie unter den Bedingungen der NCO/Carbamat-Hydrolyse gleichfalls merklich gespalten werden. Bevorzugt werden in der Regel die technisch leicht zugänglichen Polyisocyanate, z. B. das 2,4- und 2,6-Toluylendiisocyanat sowie beliebige Gemische dieser Isomeren (»TDI«), Polyphenyl-polymethylen-polyisocyanate, wie sie durch Anilin-Formaldehyd-Kondensation und anschließende Phosgenierung hergestellt werden (»rohes MDI«), sowie Urethangruppen, Isocyanuratgruppen oder Harnstoffgruppen aufweisende Polyisocyanate (»modifizierte Polyisocyanate«), insbesondere solche modifizierten Polyisocyanate, die sich vom 2,4- und/oder 2,6-Toluylendiisocyanate bzw. vom 4,4'- und/oder 2,4'-Diphenylmethandiisocyanat ableiten. Besonders bevorzugt sind die Toluylendiisocyanate (TDI).

Für die Herstellung des NCO-Voradduktes werden vorzugsweise Verbindungen mit einem Molekulargewicht von 400 bis 12 000, insbesondere 400 bis 6000, eingesetzt, welche mindestens 2, vorzugsweise 2 bis 4, insbesondere 2 oder 3, Hydroxyl-, Amino- und/oder Thiolgruppen (bevorzugt Hydroxylgruppen) aufweisen und frei an leicht hydrolysierbaren Gruppen wie z. B. Estergruppen, sind. In Frage kommen beispielsweise die in der Polyurethanchemie üblichen Polyacetale, Polythioether und insbesondere Polyether, insbesondere die Alkylenethergruppen aufweisenden Polyether. Als Alkylenethergruppen sind insbesondere die

$$-CH_2-CH_2-O-, \text{ die } -CH_2-\underset{\displaystyle CH_3}{\underset{|}{CH}}-O- \text{ und } -(CH_2)_4-O\text{-Gruppen}$$

gegebenenfalls auch in Mischungen, geeignet.

Die erfindungsgemäß in Frage kommenden, mindestens zwei, in der Regel zwei bis acht, vorzugsweise zwei bis drei, Hydroxylgruppen aufweisenden Polyether sind solche der an sich bekannten Art und werden z. B. durch Polymerisation von Epoxiden wie Ethylenoxid, Propylenoxid, Butylenoxid, Tetrahydrofuran, Styroloxid oder Epichlorhydrin mit sich selbst, z. B. in Gegenwart von Lewis-Katalysatoren wie $BF_3$, oder durch Anlagerung dieser Epoxide, vorzugsweise von Ethylenoxid und Propylenoxid, gegebenenfalls im Gemisch oder nacheinander, an Startkomponenten mit reaktionsfähigen Wasserstoffatomen wie Wasser, Alkohole, Ammoniak oder Amine, z. B. Ethylenglykol, Propylenglykol-(1,3) oder -(1,2), Trimethylolpropan, Glycerin, Sorbit, 4,4'-Dihydroxydiphenylpropan, Anilin, Ethanolamin oder Ethylendiamin hergestellt. Auch Sucrosepolyether, wie sie z. B. in den DE-B 1 176 358 und 1 064 938 beschrieben werden, sowie auf Formit oder Formose gestartete Polyether (DE-A 2 639 083 bzw. 2 737 951), kommen erfindungsgemäß in Frage. Vielfach sind solche Polyether bevorzugt, die überwiegend (bis zu 90 Gew.-%, bezogen auf alle vorhandenen OH-Gruppen im Polyether) primäre OH-Gruppen aufweisen. Auch OH-Gruppen aufweisende Polybutadine sind erfindungsgemäß geeignet.

Unter den Polythioethern seien insbesondere die Kondensationsprodukte von Thiodiglykol mit sich selbst und/oder mit anderen Glykolen angeführt.

Auch bereits Urethan- oder Harnstoffgruppen enthaltende Polyhydroxylverbindungen sowie gegebenenfalls modifizierte natürliche Polyole sind verwendbar. Auch Anlagerungsprodukte von Alkylenoxiden an Phenol-Formaldehyd-Harz oder auch an Harnstoff-Formaldehydharze sind erfindungsgemäß einsetzbar.

Die genannten Polyhydroxylverbindungen können zur ihrer Verwendung noch in der verschiedensten Weise modifiziert werden: So läßt sich gemäß DE-A 2 210 839 (US-PS 3 849 515) und DE-A 2 544 195 ein Gemisch aus verschiedenen Polyhydroxylverbindungen durch Veretherung in Gegenwart einer starken Säure zu einem höhermolekularen Polyol kondensieren, welches aus über Etherbrücken verbundenen verschiedenen Segmenten aufgebaut ist. Es ist auch möglich, z. B. gemäß DE-A 2 559 372 in die Polyhydroxylverbindungen Amidgruppen einzuführen.

Vertreter der genannten erfindungsgemäß zu verwendenden Verbindungen sind z. B. in High Polymers, Vol. XVI, »Polyurethanes, Chemistry and Technology«, verfaßt von Saunders-Frisch, Interscience Publishers, New York, London, Band I, 1962, Seiten 32 bis 42 und Seiten 44 bis 54 und Band II, 1964, Seiten 5 und 6 und 198 und 199, sowie im Kunststoff-Handbuch, Band VII, Vieweg-Höchtlen, Carl-Hanser-Verlag, München, 1966, z. B. auf den Seiten 45 bis 71, beschrieben. Selbstverständlich können Mischungen der obengenannten Verbindungen mit mindestens zwei gegenüber Isocyanaten reaktionsfähigen Wasserstoffatomen mit einem Molekulargewicht von 400 bis 12 000, z. B. Mischungen von verschiedenen Polyethern, eingesetzt werden.

Für die Herstellung des im erfindungsgemäßen Verfahren einzusetzenden NCO-Voradduktes kommen, gegebenenfalls nur anteilsweise, als Ausgangskomponenten auch Verbindungen mit mindestens zwei gegenüber Isocyanaten reaktionsfähigen Wasserstoffatomen und einem Molekulargewicht von 18 bis 399, vorzugsweise 60 bis 399, in Betracht. Auch in diesem Fall versteht man hierunter Wasser und/oder Hydroxylgruppen und/oder Aminogruppen und/oder Thiolgruppen, vorzugsweise Hydroxylgruppen aufweisende Verbindungen, wie sie als Kettenverlängerungsmittel oder Vernetzungsmittel aus der Polyurethanchemie an sich bekannt sind. Diese Verbindungen weisen in der Regel 2 bis 8, vorzugsweise 2 bis 4, gegenüber Isocyanaten reaktionsfähigen Wasserstoffatome auf.

Auch in diesem Fall können Mischungen von verschiedenen Verbindungen mit mindestens 2 gegenüber Isocyanaten reaktionsfähigen Wasserstoffatomen mit einem Molekulargewicht von 18 bis 399 verwendet werden.

Als Beispiele für derartige Verbindungen seien genannt:

Wasser, Ethylenglykol, Propylenglykol-(1,2) und -(1,3), Butylenglykol-(1,4) und -(2,3), Pentandiol-(1,5), Hexandiol-(1,6), Octandiol-(1,8), Neopentylglykol, 1,4-Bishydroxymethyl-cyclohexan, 2-Methyl-1,3-propandiol, Dibrombutandiol (US-PS 3 723 392), Glyzerin, Trimethylolpropan, Hexantriol-(1,2,6), Trimethylolethan, Pentaerythrit, Chinit, Mannit und Sorbit, Dianhydromannit und Dianhydrosorbit, Ricinusöl, Di-, Tri- und Tetraethylenglykol, Di-, Tri- und Tetrapropylenglykol, Dibutylenglykol und höhere Polyethylen-, Polypropylen- oder Polybutylenglykole mit einem Molekulargewicht bis 399, 4,4'-Dihydroxy-diphenylpropan, Di-hydroxymethylhydrochinon, Ethanolamin, Diethanolamin, N-Methyldiethanolamin, Triethanolamin, 3-Aminopropanol und Di-hydroxymethyl-resorcin.

Als niedermolekulare Polyole kommen auch die Gemische von Hydroxyaldehyden und Hydroxyketonen (»Formose«) bzw. die hieraus durch Reduktion erhaltenen mehrwertigen Alkohole (»Formit«) in Frage, wie sie bei der Selbstkondensation von Formaldehydhydrat in Gegenwart von Metallverbindungen als Katalysator und von zur Endiolbildung befähigten Verbindungen als Co-Katalysator entstehen (DE-A 2 639 084, 2 714 084, 2 714 104, 2 271 186, 2 738 154 und 2 738 512).

Erfindungsgemäß geeignete aliphatische Diamine sind beispielsweise:

Ethylendiamin, 1,4-Tetramethylendiamin, 1,6-Hexamethylendiamin, 1,12-Dodecamethylendiamin sowie deren Gemische, 1-Amino-3,3,5-trimethyl-5-aminomethyl-cyclohexan (»Isophorondiamin«), 2,4- und 2,6-Hexahydrotoluylendiamin sowie deren Gemische, Perhydro-2,4'- und -4,4'-diaminodiphenylmethan, p-Xylylendiamin, Bis-(3-aminopropyl)-methylamin, Diamino-perhydroanthrazene (DE-A 2 638 731) und cycloaliphatische Triamine gemäß DE-A 2 614 244. Auch Hydrazin und substituierte Hydrazine, z. B. Methylhydrazin, kommen erfindungsgemäß in Betracht.

Als Beispiele für aromatische Diamine seien die Ethergruppen aufweisenden Diamine gemäß DE-A 1 770 525 und 1 809 172 (UD-PS 3 654 364 und 3 736 295), gegebenenfalls in 5-Stellung substituierte 2-Halogen-1,3-phenylendiamine (DE-A 2 001 772, 2 025 896 und 2 065 869), 3,3'-Dichlor-4,4'-diamino-diphenylmethan, Toluylendiamine, 4,4'-Diaminodiphenylmethan, 4,4'-Diaminodiphenyldisulfide (DE-A 2 404 976), Diaminodiphenyldithioether (DE-A 2 509 404), durch Alkylthiogruppen substituierte aromatische Diamine (DE-A 2 638 760), Sulfonat- oder Carboxylatgruppen enthaltende aromatische Diamine (DE-A 2 720 166) sowie die in der DE-A 2 635 400 aufgeführten hochschmelzenden Diamine genannt. Beispiele für aliphatisch-aromatische Diamine sind die Aminoalkylthioaniline gemäß DE-A 2 734 574.

Die freie Isocyanatgruppen aufweisenden NCO-Voraddukte werden in an sich bekannter Weise durch Umsetzung der Reaktionspartner in der Schmelze oder in Lösung hergestellt. Das Äquivalentverhältnis von NCO-Gruppen zu aktiven Wasserstoffatomen (bevorzugt OH-Gruppen) ist in jedem Fall größer als 1, soll in der Regel zwischen 1,5 : 1 und 2,8 : 1 liegen. Selbstverständlich ist es möglich, einen noch größeren Überschuß an Polyisocyanat (z. B. 4 : 1) zu verwenden. Die Voraddukte haben je nach den gewählten Ausgangskomponenten im allgemeinen ölige bis wachsartige Konsistenz. Beträgt das NCO/OH-Verhältnis mehr als 2, so erhält man im wesentlichen nicht verlängerte Voraddukte,

während NCO-OH-Verhältnisse von unter 2 eine Erhöhung des mittleren Molekulargewichts der Vorakkukte zur Folge haben. Es ist, wie schon erläutert, auch möglich, niedermolekulare Polyole als Kettenverlängerungsmittel bei der Herstellung der Präpolymere anteilsmäßig neben höhermolekularen Ausgangsverbindungen mitzuverwenden; in diesem Fall erhält man ebenfalls höhermolekulare Voraddukte.

Für das erfindungsgemäße Verfahren werden NCO-Voraddukte bevorzugt, die aus höhermolekularen Polyetherglykolen, Polycarbonaten und/oder Polyacetalen (als relativ hydrolysestabile, höhermolekulare Polyhydroxylverbindungen), gegebenenfalls unter Mitverwendung von Kettenverlängerern der oben beschriebenen Art, und aliphatischen und/oder aromatischen Diisocyanaten im Äquivalentverhältnis von 1 : 1,5 bis 1 : 2,8, insbesondere ca. 1,9—2,1 erhalten worden sind und deren Gesamtfunktionalität in der Mischung aller Komponenten 4 nicht übersteigt.

Im erfindungsgemäßen Verfahren wird die NCO-Gruppen aufweisende Verbindung (bevorzugt ein NCO-Voraddukt) unter Rühren während eines Zeitraums von 5 Minuten bis 6 Stunden, bevorzugt 30 Minuten bis 2 Stunden, mit einer auf ca. 0 bis 70° C, vorzugsweise 0 bis 40° C, besonders bevorzugt 10 bis 25° C, temperierten Lösung einer Base in Wasser bzw. in einem Gemisch aus Wasser und einem NCO-inerten Lösungsmittel vermischt, wobei Basenkonzentration vorzugsweise 1 Gew.-Teil Base auf 5 bis 20 Gew.-Teile Wasser bzw. Wasser NCO-inertes Lösungsmittelgemisch beträgt. Bei kontinuierlicher Vermischung der NCO-Verbindung und Base werden entsprechende Mengen in hochwirksamen Mischaggregaten in kürzester Verweilzeit vermischt.

Die NCO-Gruppen aufweisende Verbindung wird dabei bevorzugt in reiner Form eingesetzt. Es ist aber auch möglich, die NCO-Gruppen aufweisende Verbindung in einem geeigneten, NCO-inerten Lösungsmittel, das vorteilhafterweise mit Wasser mischbar sein sollte (z. B. Dioxan, Tetrahydrofuran, Dimethoxyethan), zu lösen und als Lösung in die vorgelegte Base einzutragen.

In reiner Form wird die NCO-Gruppen aufweisende Verbindung bevorzugt dann verwendbar, wenn es in einem Temperaturbereich von 10 bis ca. 90° C flüssig oder verflüssigbar ist.

In gelöster Form wird die NCO-Gruppen aufweisende Verbindung bevorzugt dann eingesetzt, wenn es in einem Temperaturbereich von 10 bis ca. 90° C fest ist.

Wird das NCO-Voraddukt in Form einer Lösung in einem NCO-inerten Lösungsmittel eingesetzt, so können z. B. auf 100 Teile Lösungsmittel 1 bis 400 Teile NCO-Voraddukt verwendet werden.

Die NCO-Gruppen aufweisenden Verbindungen als auch ihre Lösungen werden bevorzugt bei 45 bis 70° C temperiert, um ihre Reaktionsgeschwindigkeit zu erhöhen und ihre feine Verteilung in der vorgelegten Basenlösung zu erhöhen. Im Falle der Verwendung von NCO-Voradduktlösungen gilt, daß sie auf 45 bis 70° C, höchstens aber bis zu einer Temperatur, die der Siedetemperatur des Solvens entspricht, erwärmt werden.

Im obengenannten Temperaturbereich weder schmelzbare noch lösliche NCO-Gruppen aufweisende Verbindungen können auch in fester, möglichst fein verteilter Form zugegeben werden.

Als »Basen« sind Oxide und/oder Hydroxide der I., II. und III. Hauptgruppe und/oder quartäre Ammoniumhydroxide für das erfindungsgemäße Verfahren einzusetzen (in der Anmeldung hier als Basen bezeichnet).

Beispiele sind Alkali-, Erdalkalihydroxide, Alkalialuminate, Erdalkalioxide wie Calciumoxid oder Tetraalkylammoniumhydroxide, Bevorzugt sind Hydroxidionen enthaltende Basen wie Alkalihydroxide, Calciumhydroxid oder Tetraalkylammoniumhydroxide wie Tetramethylammoniumhydroxid, wobei diese Basen eine hinreichende Löslichkeit des Wassers aufweisen, um Lösungen zu ergeben. Als Hydroxidion besitzende Basen werden Alkalihydroxide bevorzugt, besonders Natrium- und Kaliumhydroxid.

Die Basenmenge beträgt zwischen 0,3 und 2,0 Äquivalente pro NCO-Gruppe. Die Basenmenge wird bevorzugt so bemessen, daß nach vollständiger Reaktion noch freie Base verbleibt; werden Basen wie z. B. die Alkalihydroxide verwendet, so wird ein NCO/$OH^{\ominus}$-Molverhältnis 1 : 1,01 bis 1 : 2, bevorzugt 1 : 1,2 bis 1,8, besonders 1 : 1,4 bis 1 : 1,6, verwendet.

Es ist jedoch auch möglich, eine gegenüber der Menge an NCO-Gruppen unterstöchiometrische Menge an $OH^{\ominus}$-Ionen einzusetzen. Man erhält dann über Harnstoffgruppen vorverlängerte Produkte, was bei gewissen Anwendungszwecken vorteilhaft ist. Ein $OH^{\ominus}$/NCO-Verhältnis von $\geqq$ 0,3 : 1 kann so verwendet werden.

Um die Homogenität der Reaktionsmischung zu verbessern, wird vorzugsweise ein handelsüblicher Emulgator in Mengen von 0,05 bis 1 Gew.-Teilen, bevorzugt ca. 01, bis 0,5 Gew.-Teilen (bezogen auf 100 Teile Reaktionsgemisch), zugegeben.

Nach Beendigung der Zugabe des NCO-Voraddukts wird vorzugsweise noch ca. 15 bis 180 Minuten bei 10 bis 25° C weitergerührt. Danach wird die Carbamatreaktionsmischung mit Säure behandelt. Diese Säurebehandlung kann nach 2 verschiedenen Methoden vorgenommen werden:

## Methode A

Die Carbamatreaktionsmischung wird zugetropft, die Säurekomponente vorgelegt.

Als Säure kommen starke Säuren zur Anwendung, z. B. gegebenenfalls wäßrige, Mineralsäuren wie

Salzsäure, Schwefelsäure, verdünnte Salpetersäure, Phosphorsäure; möglich ist auch die Verbindung von starken organischen Säuren wie Oxalsäure, Ameisensäure oder Essigsäure, oder ähnlich starken organischen Säuren mit mindestens solcher Säurestärke, wie sie Essigsäure aufweist. Bevorzugt werden Salzsäure und Schwefelsäure verwendet, besonders bevorzugt ist Schwefelsäure. Die vorgelegte Säure hat zweckmäßigerweise eine Temperatur von 0 bis 20° C. Unter Rühren wird die Carbamat-Reaktionsmischung in einem Zeitraum von 1 Minute bis 6 Stunden, bevorzugt 30 Minuten bis 2 Stunden, zugegeben, wobei die Temperatur der Reaktionsmischung unter 25° C durch externe Kühlung zu halten ist. Die Zeitdauer der Carbamatzugabe ist abhängig von der Heftigkeit der sofort einsetzenden Gasentwicklung.

Das Säure/Basen-Äquivalentverhältnis beträgt etwa 1 : 1, d. h. pro val $OH^-$-Ion wird 1 val Protonen eingesetzt (etwa äquivalente Mengen). Das Reaktionsgemisch ist dann neutral bis basisch, wie es dem pH-Wert eines Gemisches aus Alkalisalzen mit einer aromatischen bzw. aliphatischen Aminoverbindung entspricht. 5 bis 30 Minuten wird bei 20° C weitergerührt.

Bei einer flüssigen Aminoverbindung wird die Aufarbeitung z. B. so vorgenommen, daß der gesamte Reaktionsansatz durch Destillation von flüchtigen Anteilen befreit (Destillation z. B. bei 20 bis 933 mbar 15 bis 700 Torr) und 40 bis 150° C Badtemperatur), die ausgefallenen Salzanteile durch Filtration (z. B. mit einer beheizbaren Drucknutsche) abgetrennt und das verbliebene aminische Produkt z. B. innerhalb 2 Stunden bei 0,013 bis 20 mbar und 80 bis 150° C von Spuren flüchtiger Komponenten befreit wird.

Fällt die Aminoverbindung fest an, so wird sie abfiltriert und, wenn nötig nach üblichen Methoden wie Umkristallisation oder Umfällung gereinigt.

## Methode B

Methode B ist gegenüber Methode A bevorzugt.

Hierbei werden die Carbamatkomponente und die Säurekomponente getrennt einem gemeinsamen Reaktionsraum zudosiert. Bevorzugt wird dabei so verfahren, daß in gleichen Zeiträumen gleiche val-Mengen an $OH^-$-Ionen oder an tert.-Aminogruppen und Protonen den Reaktionsraum erreichen, so daß Ungleichgewichte zwischen beiden Reaktionskomponenten vermieden werden. Die Dosierung kann z. B. über graduierte Tropfrichter oder mittels einer Kolbendosierpumpe oder einer anderen maschinellen Dosiervorrichtung vorgenommen werden.

Im übrigen gilt das, was über die einzuhaltenden Temperaturbereiche und über die Aufarbeitung bei Methode A gesagt wurde, auch hier. Reaktionszeiten sind im allgemeinen, wie sie auch bei Methode A angegeben werden. Es ist jedoch auch möglich — und bei einer kontinuierlichen Ausführungsform bevorzugt — beide Komponenten in sehr kurzer Zeit (Sekunden oder Bruchteilen davon) mit einer geeigneten, maschinell betriebenen Vorrichtung zu vermischen und zur Reaktion zu bringen.

Die erfindungsgemäß erhaltenen Polyamine werden wegen ihres niedrigen Dampfdrucks vorzugsweise als Reaktionspartner für Polyisocyanate bei der Herstellung von gegebenenfalls zelligen Polyurethankunststoffen eingesetzt, wobei sie gegebenenfalls auch mit anderen niedermolekularen (Molekulargewicht 32 bis 399) und/oder höhermolekularen (Molekulargewicht: 400 bis ca. 12 000) Verbindungen mit gegenüber Isocyanaten reaktiven Gruppen kombiniert werden können. Geeignete Ausgangskomponenten für die Herstellung von Polyurethankunststoffen werden oben im Zusammenhang mit der Prepolymerherstellung bzw. auch in DE-A 2 302 564, DE-A 2 432 764 (US-PS 3 963 679) sowie in den DE-A 2 639 083, 2 512 385, 2 513 815, 2 550 796, 2 550 797, 2 550 833, 2 550 860 und 2 550 862 genannt. Dort finden sich auch Hinweise auf bei der Polyurethanherstellung gegebenenfalls mitzuverwendende Hilfs- und Zusatzstoffe. Die Herstellung von Polyurethanharnstoffen mittels der erfindungsgemäß hergestellten Polyamine ist ebenfalls Gegenstand der vorliegenden Erfindung.

Weiter Verwendungszwecke der erfindungsgemäß hergestellten Polyamine sind z. B. Kupplungskomponenten für Diazofarbstoffe, Härter für Epoxid- und Phenolharze sowie alle anderen an sich bekannten Reaktionen von Aminen wie Amid- oder Imidbildung etc.

Die folgenden Beispiele dienen der Erläuterung des erfindungsgemäßen Verfahrens. Wenn nicht anders vermerkt, sind Mengenangaben als Gewichtsteile bzw. Gewichtsprozente zu verstehen.

## Beispiel 1

### 1.1. Herstellung des Carbamats

Eine Lösung von 88 g (1,57 Mol) Kaliumhydroxid und 1,1 g Mersolat® H in 1,1 l Wasser wird vorgelegt und mit einem Eisbad extern gekühlt. Innerhalb 60 Minuten werden 1,1 kg eines aus 2,4-Toluylendiisocyanat und einem Polypropylenglykolether der durchschnittlichen Molmasse 2000 hergestellten und einem NCO-Wert von 4% aufweisenden NCO-Voraddukte zugegeben. Dabei wird eine Innentemperatur von 18 bis 23° C aufrechterhalten. Nachdem 45 Minuten bei 20° C nachgerührt wurde, wird zur Viskositätserniedrigung mit 1 l Methanol versetzt.

1.2. Herstellung des Amins (Methode A)

Obige Carbamat-Reaktionsmischung wird innerhalb 60 Minuten zu einer Lösung von 155 g konz. Salzsäure (1,57 Mol HCl) in 150 ml Wasser gegeben, wobei unter intensivem Rühren eine Innentemperatur von 20 bis 23° C gehalten wird. Es entweichen 22 l Kohlendioxid (93,6% der Theorie). Die zweiphasige Lösung wird durch Destillation (20 mbar/100° C und dann 0,13 mbar/100° C) von den Lösungsmitteln befreit; durch Filtration wird das ausgefallene Kaliumchlorid abgetrennt. Das ölige Filtrat zeigt mit salpetersaurer Silbernitratlösung keine Reaktion.

Produktdaten:

| | |
|---|---|
| NH-Zahl (mg KOH/g) | 41,8 (Th. 48,8) |
| Säurezahl (mg KOH/g) | 0,9 |
| Molmasse | 2600 (Th. 2296) |
| Wassergehalt (%) | 0,04 |
| Viskosität $\eta$ 75° C (mPa · s) | 418 |
| Ausbeute (g) | 1043 (93% der Theorie) |

Beispiel 2

2.1. Herstellung des Carbamats

Vorgelegt wird eine eisgekühlte Mischung aus 204 g 50%iger Kaliumhydroxidlösung (1,82 Mol), 1,4 l Wasser und 1,5 g darin gelösten Mersolats® H. Innerhalb 60 Minuten werden 1,5 kg eines 60° C warmen, aus Toluylen-2,4-diisocyanat und einem Polypropylenglykolether der durchschnittlichen Molmasse 2000 hergestellten und einen NCO-Wert von 3,4% aufweisenden NCO-Voraddukts zugegeben (Verhältnis $OH^{\ominus}$/NCO = 1,5). Dabei wird eine Innentemperatur von 18 bis 22° C aufrechterhalten. 20 Minuten wird bei 20° C nachgerührt.

2.2. Herstellung des Amins (Methode B)

1 kg der obigen Reaktionsmischung wird mit 1 l Methanol verdünnt und in einen geeigneten Tropftrichter gegeben (A).

29,9 g 96%ige Schwefelsäure werden mit 150 ml Wasser verdünnt und ebenfalls in einen geeigneten Tropftrichter gegeben (B).

Innerhalb 15 Minuten werden beide Tropftrichter A und B gleichzeitig in einen 100 ml Wasser (als Rührmasse) enthaltenden Reaktionsraum so entleert, daß pro Zeiteinheit gleiche val-Mengen an Base und Säure zugegeben werden. Das Reaktionsgefäß wird so gekühlt, daß die Innentemperatur 20 bis 25° C beträgt. Die Kohlendioxid-Abspaltung erfolgt zügig und spontan, es werden 8,8 l Kohlendioxid (100%) gemessen. Aus der zweiphasigen Reaktionsmischung werden Wasser und Methanol bei 20 mbar/100° C und dann 0,13 mbar/100° C) abdestilliert und das Natriumsulfat abgesaugt. Das Filtrat ist frei von Sulfatanionen (Baryt-Test).

Produktdaten:

| | |
|---|---|
| Ausbeute (g) | 430 (91% der Theorie) |
| NH-Zahl (mg KOH/g) | 44,3 (Th. 48,8) |
| Säurezahl (mg KOH/g) | 0,1 |
| Molmasse | 2500 (Th. 2296) |
| Viskosität $\eta$ 75° C (mPa · s) | 414 |
| Wassergehalt (%) | 0,01 |

Beispiel 3

3.1. Herstellung des Carbamats

Vorgelegt wird eine Lösung von 37,29 g Kaliumhydroxid (0,666 Mol) und 0,2 g Mersolat® H in 850 ml Wasser. Sie wird mit einem Eisbad extern gekühlt. Unter Rühren wird innerhalb 70 Minuten 1 kg eines 50° C warmen, aus 4,4'-Diisocyanatodiphenylmethan und einem auf Propylenglykol gestarteten Mischpolyethers aus Ethylenoxid und Propylenoxid der durchschnittlichen Molmasse 4000 hergestellten und

einen NCO-Wert von 1,86% aufweisenden NCO-Prepolymers zugegeben ($OH^{\ominus}$/NCO = 1,5). Dabei wird eine Innentemperatur von 15 bis 20° C aufrechterhalten. 20 Minuten wird bei 20° C nachgerührt. Danach wird mit 600 ml Ethanol verdünnt.

3.2. Herstellung des Amins (Methode B)

Obige Reaktionsmischung wird in einen geeigneten Tropftrichter gegeben (A).

65,7 g konz. Salzsäure (0,666 Mol Chlorwasserstoff) werden mit 350 ml Wasser verdünnt und ebenfalls in einen geeigneten Tropftrichter überführt (B).

Innerhalb 35 Minuten werden beide Tropftrichter (A) und (B) gleichzeitig in einen 150 ml Wasser enthaltenden Reaktionsraum so entleert, daß pro Zeiteinheit gleiche val-Mengen an Säure und Base zugegeben werden. Das Reaktionsgefäß wird abgekühlt, so daß die Innentemperatur sich im Bereich 20 bis 25° C bewegt. Die Kohlendioxidabspaltung erfolgt zügig und spontan, es werden 9,4 l (94,5% der Theorie) $CO_2$-Entwicklung gemessen. Aus der zweiphasigen Reaktionsmischung werden Wasser und Ethanol abdestilliert (20 mbar/100° C und dann 0,26 mbar/100° C) und das Kaliumchlorid abgesaugt. Das Filtrat ist frei von Chloridionen (Silbernitrat-Test).

| | |
|---|---|
| Ausbeute (g) | 950 (96%) |
| Säurezahl (mg KOH/g) | 0,4 |
| Viskosität $\eta$ 75° C (mPa · s) | 1350 |
| NH-Zahl (mg KOH/g) | 24,0 (Th. 25,2) |
| Molmasse | 4700 (Th. 4448) |
| Wassergehalt (%) | 0,2 |

Beispiel 4

4.1. Herstellung des Carbamats

Vorgelegt wird eine Lösung von 38,63 g Kaliumhydroxid (0,69 Mol) und 0,5 g Mersolat® H in 600 ml Wasser. Sie wird mit einem Eisbad gekühlt. Unter Rühren wird innerhalb 40 Minuten 1 kg eines 65° C warmen, aus 2,4-Toluylendiisocyanat und einem auf Trimethylolpropan gestarteten Polypropylen/Polyethylenblockcopolyethertriol der durchschnittlichen Molmasse 6000 hergestellten und einen NCO-Wert von 1,93% aufweisenden, gedünnschichteten NCO-Voradduktes zugegeben ($OH^{\ominus}$/NCO-Verhältnis = 1,5 : 1). Dabei wird eine Innentemperatur von 18 bis 22° C aufrechterhalten. 60 Minuten wird bei 20° C nachgerührt. Danach wird unter Rühren mit 500 ml i-Propanol verdünnt.

4.2. Herstellung des Amins (Methode B)

Obige Reaktionsmischung wird in einen geeigneten Tropftrichter gegeben (A).

35,22 g 96%ige Schwefelsäure (0,345 Mol $H_2SO_4$) werden mit 300 ml Wasser verdünnt und in einen geeigneten Tropftrichter überführt (B).

Innerhalb 90 Minuten werden beide Tropftrichter (A) und (B) gleichzeitig in einen 100 ml Wasser enthaltenden Reaktionsraum so entleert, daß pro Zeiteinheit gleiche val-Mengen an Säure und Base zugegeben werden. Das Reaktionsgefäß wird gekühlt, so daß die Innentemperatur 30° C nicht überschreitet. Die Kohlendioxid-Entwicklung setzt spontan ein, insgesamt werden 25,8 l (99% der Theorie) $CO_2$ gemessen. Aus der zweiphasigen Reaktionsmischung werden Wasser und i-Propanol abdestilliert (20 mbar/100° C und dann 0,067 mbar/100° C), das Kaliumsulfat abgesaugt und das Filtrat von Spuren flüchtiger Bestandteile bei 0,27 mbar/100° C befreit.

| | |
|---|---|
| Ausbeute (g) | 980 (100%) |
| Säurezahl (mg KOH/g) | 0,42 |
| Viskosität $\eta$ 75° C (mPa · s) | 952 |
| NH-Zahl (mg KOH/g) | 23,5 (Th. 26,1) |
| Molmasse | 7100 (Th. 6444) |
| Wassergehalt (%) | 0,31 |

Beispiel 5

5.1. Herstellung des Carbamats

Vorgelegt wird eine Lösung von 47,71 g Natriumhydroxid (1,19 Mol NaOH) und 0,6 g Mersolat® H in

500 ml Wasser. Unter Rühren wird innerhalb 165 Minuten 1 kg eines 55°C warmen, aus 2,4-Toluylendiisocyanat und einem auf Propylenglykol gestarteten Polypropylenglykolether der durchschnittlichen Molmasse 2000 hergestellten und einen NCO-Wert von 3,58% aufweisenden, gedünnschichteten NCO-Prepolymers zugegeben ($OH^{\ominus}$/NCO-Verhältnis = 1,4 : 1). Dabei wird eine Temperatur von 15 bis 20°C eingehalten. Nachdem 45 Minuten bei 20°C nachgerührt wurde, wird mit 500 ml Dioxan verdünnt.

5.2. Herstellung des Amins (Methode A)

Vorgelegt werden 90,85 g 85%ige Phosphorsäure (0,595 Mol $H_3PO_4$), die mit 150 ml Wasser verdünnt wird. Innerhalb 120 Minuten wird unter Rühren obige Carbamatreaktionsmischung zugegeben, wobei die Temperatur nicht über 25°C steigen durfte. Die Kohlendioxid-Entwicklung betrug 18,6 l (97,5%). Aus der zweiphasigen Reaktionsmischung werden Dioxan und Wasser bei 20 mbar/100°C abdestilliert. Nach der Entfernung von Resten flüchtiger Stoffe bei 0,13 mbar/100°C wird das Dinatriumphosphat ($Na_2HPO_4$) abgesaugt.

| | |
|---|---|
| Ausbeute (g) | 975 (100%) |
| NH-Zahl (mg KOH/g) | 47,1 (Th. 48,8) |
| Säurezahl (mg KOH/g) | 0,7 |
| Molmasse | 2400 (Th. 2296) |
| Wassergehalt (%) | 0,14 |
| Viskosität $\eta$ 75°C (mPa · s) | 389 |

Beispiel 6

6.1. Herstellung des Carbamats

Vorgelegt wird eine Lösung von 71,23 g Natriumhydroxid (1,78 Mol NaOH) in 1 l Wasser. Unter Rühren wird innerhalb 120 Minuten 1 kg eines 70°C warmen, aus einem Gemisch aus 2,4-Toluylendiisocyanat (80%) und 2,6-Toluylendiisocyanat (20%) und einem Polypropylenglykolether des durchschnittlichen Molekulargewichts 1000 hergestellten und einen NCO-Wert von 6,23% aufweisenden, gedünnschichteten NCO-Prepolymers zugegeben (NCO/$OH^{\ominus}$-Verhältnis = 1 : 1,2). Dabei wird eine Innentemperatur von 15 bis 20°C eingehalten. Nachdem 30 Minuten bei 20°C nachgerührt wurde, wird mit 1 l Methanol verdünnt.

6.2. Herstellung des Amins (Methode B)

Obige Reaktionsmischung wird in einen geeigneten Tropftrichter überführt (A).

90,85 g 96%ige Schwefelsäure (0,88 Mol $H_2SO_4$) werden mit 500 ml Wasser verdünnt und in einen geeigneten Tropftrichter überführt (B). Innerhalb 90 Minuten werden beide Tropftrichter (A) und (B) gleichzeitig in einen 100 ml Wasser enthaltenden Reaktionsraum so entleert, daß pro Zeiteinheit gleiche val-Mengen an Säure und Base zugegeben werden. Das Reaktionsgefäß wird gekühlt, so daß die Innentemperatur 30°C nicht überschreitet. Die starke Kohlendioxid-Entwicklung setzt sofort ein, es werden 83,2 $CO_2$ (96,3% der Theorie) aufgefangen. Aus der zweiphasigen Reaktionsmischung werden nach Beendigung der Gasentwicklung Wasser und Methanol (100°C, 20 mbar) abdestilliert, das Natriumsulfat abgesaugt und Reste flüchtiger Stoffe aus dem Filtrat bei 0,33 mbar/100°C entfernt.

Produktdaten:

| | |
|---|---|
| Ausbeute (g) | 950 (99%) |
| NH-Zagl (mg KOH/g) | 71,3 (Th. 86,4) |
| Säurezahl (mg KOH/g) | 0,4 |
| Molmasse | 1600 (Th. 1296) |
| Viskosität $\eta$ 75°C (mPa · s) | 790 |

Beispiel 7

7.1. Herstellung des Carbamats

Vorgelegt wird eine Lösung von 180,8 g Natriumhydroxid (4,52 Mol NaOH) und 0,8 g Mersolat® H in

1 l Wasser. Unter Rühren wird innerhalb 120 Minuten 1 kg einer 30° C warmen Lösung eines NCO-Prepolymers in 1000 ml Dioxan zugegeben. Dieses NCO-Prepolymer stellt ein gedünnschichtetes Prepolymer aus 1,6-Diisocyanatohexan und Tripropylenglykol dar und weist einen NCO-Wert von 14,6% auf ($OH^{\ominus}$/NCO-Verhältnis 1,3 : 1). Dabei wird eine Innentemperatur von 15 bis 20° C eingehalten. Bei 25° C wird 45 Minuten nachgerührt.

7.2. Herstellung des Amins (Verfahren B)

Obige Reaktionsmischung wird in einen geeigneten Tropftrichter überführt (A).

233,1 g 96%ige Schwefelsäure (2,26 Mol $H_2SO_4$) wird auf 1 l verdünnt und ebenfalls in einen geeigneten Tropftrichter gegeben (B).

Innerhalb 150 Minuten werden beide Tropftrichter (A) und (B) gleichzeitig in einen mit 100 ml Wasser als Vorlage bestückten Reaktionsraum so entleert, daß pro Zeiteinheit gleiche val-Mengen an Säure und Base zugegeben werden. Das Reaktionsgefäß wird gekühlt, so daß die Innentemperatur 25° C nicht überschreitet. Die heftige Gasentwicklung setzt 190 l (98% der Theorie) Kohlendioxid frei. Aus der zweiphasigen Reaktionsmischung werden Dioxan und Wasser abdestilliert, zuerst bei 20 mbar/100° C und dann 0,13 mbar/100° C. Das Salz wird durch Filtration vom Amin abgetrennt.

Produktdaten:

| | |
|---|---|
| Ausbeute (g) | 900 (99% der Theorie) |
| NH-Zahl (mg KOH/g) | 189 (Th. 194) |
| Molmasse | 600 (Th. 577) |
| Viskosität $\eta$ 75° C (mPa · s) | 260 |
| Wassergehalt (%) | 0,25 |
| Säurezahl (mg KOH/g) | 0,28 |

**Patentansprüche**

1. Verfahren zur Herstellung von Urethan- und/oder Harnstoff- und/oder Biuret- und/oder Isocyanuratgruppen, sowie gegebenenfalls Alkylenether- und/oder Carbonat- und/oder Acetalgruppen aufweisenden aromatischen und/oder aliphatischen primären Polyaminen durch Hydrolyse von aromatische und/oder aliphatische NCO-Gruppen aufweisenden Verbindungen dadurch gekennzeichnet, daß man

a) die NCO-Gruppen aufweisenden Verbindungen durch Vermischen mit Basen aus der Reihe der I., II. und III. Hauptgruppe des Periodensystems und/oder quartären Ammoniumhydroxiden in Gegenwart von Wasser in die Carbamate überführt.
   und zur Gewinnung des Polyamins
b) das Carbamat durch Vereinigung mit einer der Base äquivalenten Menge einer starken Säure direkt in das freie Amin und gleichzeitig die überschüssige Base in das entsprechende Säuresalz überführt und
c) das freie Amin in an sich bekannter Weise isoliert.

2. Verfahren nach Anspruch 1, dadurch gekennzeichnet, daß man beim Ansäuern die Carbamat-Reaktionsmischung zu der vorgelegten, äquivalenten Menge Säure gibt.

3. Verfahren nach Anspruch 1, dadurch gekennzeichnet, daß man beim Ansäuern die Carbamat-Reaktionsmischung und die Säure so miteinander vermischt, daß pro Zeiteinheit gleiche Äquivalent-Mengen an Säure und Base miteinander zur Reaktion kommen.

4. Verfahren nach Anspruch 1 bis 3, dadurch gekennzeichnet, daß bei der Carbamatbildung das Äquivalentverhältnis zwischen Basen- und NCO-Gruppen zwischen 0,3 : 1 bis 2 : 1 liegt.

5. Verfahren nach Anspruch 1 bis 4, dadurch gekennzeichnet, daß bei der Carbamatbildung die wäßrige Base in Form einer 5 bis 50gew.-%igen Lösung oder Mischung in Wasser eingesetzt wird.

6. Verfahren nach Anspruch 1 bis 5, dadurch gekennzeichnet, daß bei der Carbamatbildung 0,05 bis 1 Gew.-Teil (bezogen auf 100 Teile Reaktionsgemisch) mindestens einer emulgierend wirkenden Verbindung zugesetzt werden.

7. Verfahren nach Anspruch 1 bis 6, dadurch gekennzeichnet, daß als NCO-Gruppen aufweisende Verbindungen NCO-Voraddukt aus einem, zwei oder drei Hydroxylgruppen aufweisenden Polyether mit einem durchschnittlichen Molekulargewicht von 400 bis 6000 sowie gegebenenfalls einem Polyol mit einem Molekulargewicht zwischen 62 und 399 und einem Polyisocyanat im NCO/OH-Verhältnis von 1,5 : 1 bis 2,8 : 1 als Ausgangsstoff zur Hydrolyse eingesetzt wird.

8. Verfahren nach Anspruch 1 bis 7, dadurch gekennzeichnet, daß als Polyisocyanat ein Toluylendiisocyanat bzw. ein Gemisch isomerer Toluylendiisocyanate verwendet wird.

9. Verwendung von Polyaminen nach dem Verfahren von Anspruch 1 bis 9 als Reaktionskomponenten zur Herstellung von Polyurethanen.

## Claims

1. Process for the production of aromatic and/or aliphatic primary polyamines containing urethane and/or urea and/or biuret and/or isocyanurate groups and optionally alkylene ether and/or carbonate and/or acetal groups by hydrolysing compounds containing aromatic and/or aliphatic NCO groups, characterised in that

a) the compounds containing NCO groups are converted into the carbamates by mixing them with bases from the series comprising main groups I, II and III of the periodic system and/or quaternary ammonium hydroxides in the presence of water, and, to obtain the polyamine
b) the carbamate is converted directly into the free amine by combiningit with a quantity of a strong acid which is equivalent to the base and, at the same time, the excess base is converted into the corresponding acid salt and
c) the free amine is isolated in a manner known per se.

2. Process according to Claim 1, characterised in that, for the acidification, the carbamate reaction mixture is added to the initially introduced equivalent quantity of acid.

3. Process according to Claim 1, characterised in that, for the acidification, the carbamate reaction mixture and the acid are mixed with each other in such a manner that, per unit of time, the same equivalent quantities of acid and base are reacted with each other.

4. Process according to Claim 1 to 3, characterised in that the equivalent ratio between base and NCO groups in the carbamate formation is between 0.3 : 1 and 2 : 1.

5. Process according to Claim 1 to 4, characterised in that, in the carbamate formation, the aqueous base is used in the form of a 5 to 50% by weight solution or mixture in water.

6. Process according to Claim 1 to 5, characterised in that, in the carbamate formation, 0.05 to 1 part by weight (based on 100 parts of reaction mixture) of a least one emulsifying compound is added.

7. Process according to Claim 1 to 6, characterised in that an NCO preadduct of a polyether containing two or three hydroxyl groups and having an average molecular weight of 400 to 6,000 and, optionally, a polyol having a molecular weight between 62 and 399 and a polyisocyanate, in an NCO/OH ratio of 1.5 : 1 to 2.8 : 1, is used as the compounds containing NCO groups forming the starting material for the hydrolysis.

8. Process according to Claim 1 to 7, characterised in that a toluylene diisocyanate or a mixture of isomeric toluylene diisocyanates is used as the polyisocyanate.

9. Use of polyamines according to the process of Claim 1 to 9 as reaction components for the production of polyurethanes.

## Revendications

1. Procédé de production de polyamines primaires aromatiques et/ou aliphatiques portant des groupes uréthanne et/ou urée et/ou biuret et/ou isocyanurate ainsi que, le cas échéant, des groups alkylène-éther et/ou carbonate et/ou acétal, par hydrolyse de composés portant des groupes NCO aromatiques et/ou aliphatiques, caractérisé en ce que

a) les composés porteurs de groupes NCO sont transformés en carbamates par mélange avec des bases de la série des groupes principaux I., II. et III. du système périodique et/ou des hydroxydes d'ammonium quaternaire en présence d'eau
et pour l'obtention de la polyamine
b) le carbamate est transformé par réunion avec une quantité, équivalant à la base, d'un acide fort, directement en l'amine libre en même temps que la base en excès est transformée en le sel d'acide correspondant et
c) l'amine libre est isolée d'une manière connue.

2. Procédé suivant la revendication 1, caractérisé en ce que, lors de l'acidification, on ajoute le mélange réactionnel du carbamate à la quantité équivalente d'acide préalablement introduite.

3. Procédé suivant la revendication 1, caractérisé en ce que, lors de l'acidification, on mélange ensemble le mélange réactionnel du carbamate et l'acide de manière que des quantités égales d'équivalents d'acide et de base soient amenées à réagir ensemble par unité de temps.

4. Procédé suivant les revendications 1 à 3, caractérisé en ce que, lors de la formation du carbamate, le rapport des équivalents entre groups basiques et groups NCO se situe entre 0,3 : 1 et 2 : 1.

5. Procédé suivant les revendications 1 à 4, caractérisé en ce que, lors de la formation du carbamate, la base aqueuse est utilisée sous la forme d'une solution ou d'un mélange à 5—50% en poids dans l'eau.

6. Procédé suivant les revendications 1 à 5, caractérisé en ce que, lors de la formation du carbamate, on ajoute 0,05 à 1 partie en poids (par rapport à 100 parties en poids de mélange réactionnel) d'au moins un composé à action émulsionnante.

7. Procédé suivant les revendications 1 à 6, caractérisé en ce qu'on utilise comme composés porteurs de groups NCO un produit de pré-addition à groupes NCO dérivé d'un polyéther portant deux ou trois groupes hydroxyle, avec un poids moléculaire moyen de 400 à 6000 ainsi que, le cas échéant, d'un polyol ayant un poids moléculaire compris entre 62 et 399 et d'un polyisocyanate dans le rapport NCO/OH de 1,5 : 1 à 2,8 : 1 comme matière de départ destinée à l'hydrolyse.

8. Procédé suivant les revendications 1 à 7, caractérisé en ce qu'on utilise comme polyisocyanate un diisocyanatotoluène ou un mélange de diisocyanatotoluènes isomères.

9. Utilisation de polyamines suivant le procédé des revendications 1 à 9 comme composante réactionnels pour l'obtention de polyuréthannes.